Europäisches Patentamt

(19) European Patent Office

Office européen des brevets

(11) Publication number: **0 007 173**
**B1**

(12) **EUROPEAN PATENT SPECIFICATION**

(45) Date of publication of patent specification: **17.03.82**

(51) Int. Cl.³: **A 47 F 1/06, B 65 D 83/04**

(21) Application number: **79301060.4**

(22) Date of filing: **05.06.79**

(54) **Magazine for articles to be dispensed from a stack.**

(30) Priority: **05.06.78 US 912290**

(43) Date of publication of application:
**23.01.80 Bulletin 80/2**

(45) Publication of the grant of the patent:
**17.03.82 Bulletin 82/11**

(84) Designated Contracting States:
**BE CH DE FR GB IT SE**

(56) References cited:
**US - A - 3 115 991**

(73) Proprietor: **EASTMAN KODAK COMPANY**
**343 State Street**
**Rochester, New York 14650 (US)**

(72) Inventor: **Scherer, George Wyant**
**Kodak Park**
**Rochester New York 14650 (US)**
Inventor: **Covington, Roger Galen**
**Kodak Park**
**Rochester New York 14650 (US)**

(74) Representative: **Trangmar, Leigh Alan et al,**
**KODAK LIMITED P.O. Box 114 246 High Holborn**
**London WC1V 7EA (GB)**

Courier Press, Leamington Spa, England.

Magazine for articles to be dispensed from a stack.

This invention relates to containers for articles, including a chamber in which a stack of articles may be received and a dispensing station at one end of the chamber at which articles are removable in sequence from the forward end of the stack.

In U.S. Patent Specification No. 3,115,991 there is disclosed an article container in the form of a cutting blade magazine for use in a dispenser also disclosed therein. The magazine includes a generally box-like housing bounding a chamber with a dispensing station at one end and an aperture at the other end to allow a plunger of the dispenser to enter the magazine to push a stack of blades towards the dispensing station. The magazine is received in a nest in the dispenser which includes a push blade for entering a slot in one face of the magazine at the dispensing station and for pushing the forwardmost blade out of an aligned slot in the opposite face of the magazine.

The article container, namely the magazine, disclosed in U.S. Patent Specification No. 3,115,991 has the disadvantage that if the magazine is taken out of the dispenser when some but not all the blades have been dispensed the blades will be free to move around within the magazine and probably become misaligned.

It is an object of the present invention to overcome the aforementioned problem in an article container.

According to the present invention the container is characterized by a stack positioning element in the chamber having an anti-backup means and being movable toward the dispensing station to move a received stack of articles towards the dispensing station and to move the temporarily forwardmost article into the dispensing station, the anti-backup means on the stack positioning element being engageable with the boundary of the chamber for inhibiting movement of the stack positioning element away from the dispensing station, biasing means for biasing the anti-backup means towards engagement with the boundary of the chamber, and means for opposing said bias when a force is applied to the stack towards the dispensing station.

Such a container has the advantage that articles in the chamber are not free to move within the chamber when the force biasing the articles towards the dispensing station is withdrawn.

Embodiments of the present invention will now be described with reference to the accompanying drawings, in which:

Fig. 1 is a perspective view of a slide container apparatus in accordance with a first embodiment of the present invention;

Fig. 2 is a perspective view of the apparatus of Fig. 1 taken from another angle;

Fig. 3 is an exploded view of the apparatus of Fig. 1 showing a slide stack and a stack positioning element;

Fig. 4 is a cross-sectional view taken along line 4—4 in Fig. 1 and including a schematic illustration of a nest for the container;

Fig. 5 is a cross sectional view of the stack positioning element of Fig. 3 and a portion of the container;

Fig. 6 is a view similar to Fig. 5 showing the configuration of the stack positioning element when pressure is applied to it by a plunger;

Fig. 7 is a view, generally similar to that of a portion of Fig. 3, of a second form of stack positioning element in accordance with the present invention;

Fig. 8 is similar to Fig. 5, but shows the second stack positioning element of Fig. 7; and

Fig. 9 is similar to Fig. 6, but shows the second stack positioning element of Fig. 7.

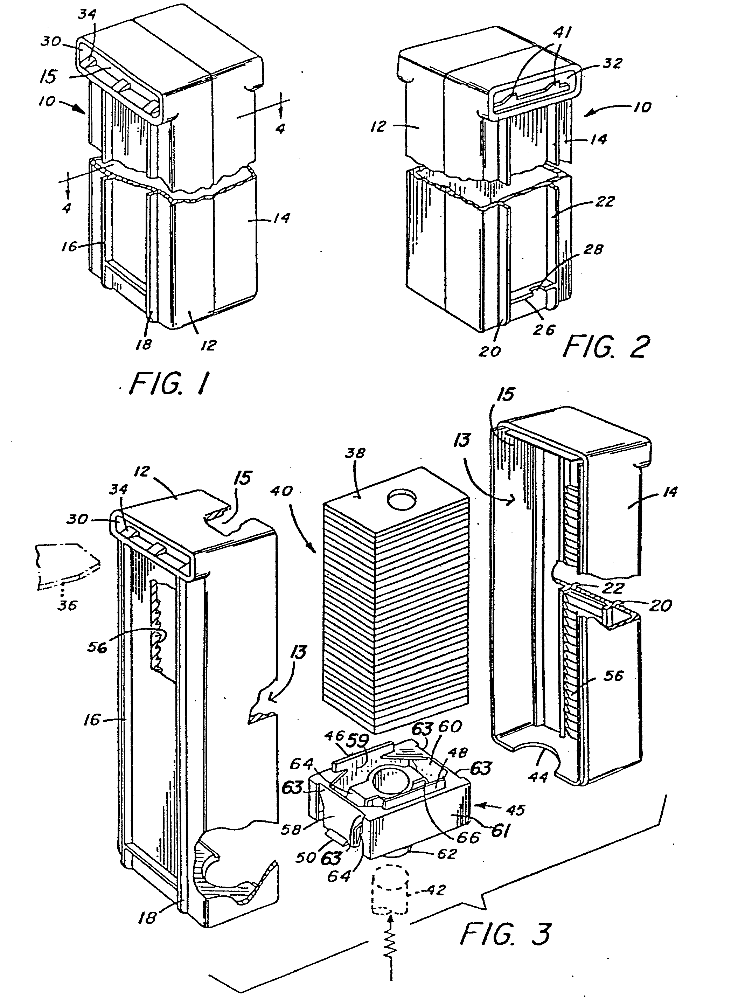

A first embodiment of the present invention, illustrated in Figs. 1 and 2, includes a container 10 adapted to hold a stack of test slides for supply singly in succession to a chemical analyzer (not shown) such as the analyzer disclosed in French Specification No. 2,374,631. Container 10 includes a generally rectangular casing formed from two parts 12 and 14, shown fixedly secured together in Figs. 1 and 2, and apart and prior to assembly in Fig. 3, which bound a chamber 13 for the stack.

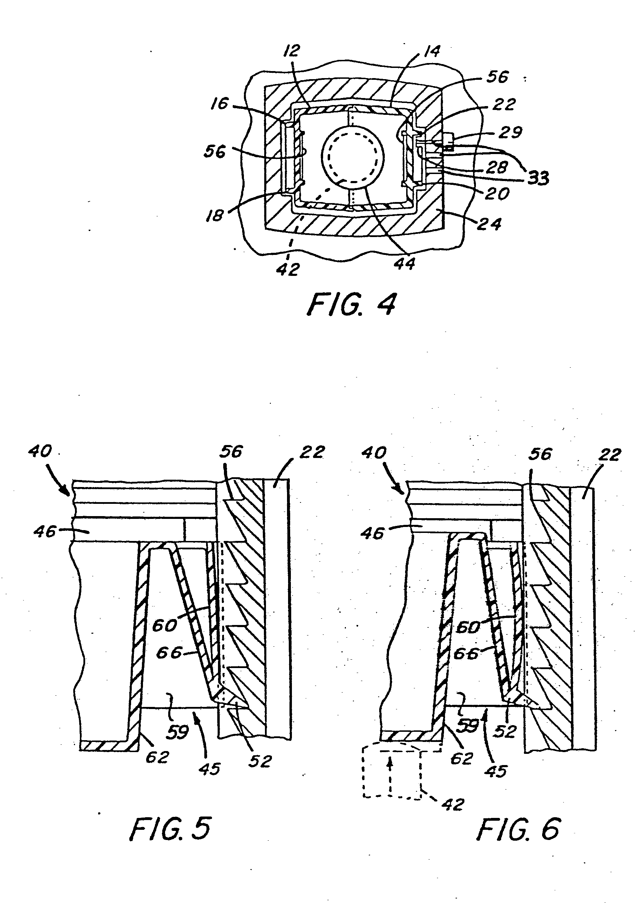

Casing part 12 has a pair of rails 16 and 18, and casing part 14 has a similar, but more closely spaced, pair of rails 20 and 22. These rails, and the different spacing thereof ensure proper orientation of the container in a nest 24 (Fig. 4) of a chemical analyzer.

To aid in identification of the chemical reagent contained in the slides in the container and to ensure that slides with only a desired chemical reagent are put in a particular nest in the analyzer, each container is provided with a notch code system. Referring to Figs. 2 and 4, a web 26 extends between rails 20 and 22. A portion of web 26 has been removed, such as by punching, to provide a notch 28. The position of the notch 28 along the web is predetermined in accordance with particular chemical reagent carried by the slides in the container. Mating structure in the analyzer nest 24 is provided to interfere with webs other than those notch coded for the proper reagent for the biological test to be performed. In Fig. 4, such mating structure has been schematically shown as a pin 29 selectively receivable in a plurality of holes 33. Each hole 33 corresponds to a particular biological test so that insertion of pin 29 into a selected hole 33 permits reception in the nest of only those containers having notches 28 in web 26 aligned with the selected hole 33.

A dispensing station 15 at the forward end of the chamber 13 in the container 10 (i.e., at the top of the container 10 as shown in Figs. 1—3) includes a pair of slots 30 and 32 for removing slides 38 from the container 10. Slot 30 is ramped (three ramps 34 are shown) to guide a push blade 36 (Fig. 3) of the analyzer into contact with the trailing edge of the forwardmost slide 38 (i.e., the uppermost in the Figures) of a slide stack 40. Slot 32 has a pair of tabs 41 which normally retain the slides 38 in the container 10 until the forwardmost is pushed out by push blade 36. The push blade 36 extends through slot 30 to push the forwardmost slide 38 out of slot 32 and into automatic slide handling means, not shown, of the analyzing apparatus.

When push blade 36 is withdrawn from slot 30, slide stack 40 is indexed forwardly (upwardly in the drawings) by a spring-loaded plunger 42 so that the now forwardmost slide 38 contacts the end of the container 10. The plunger 42 extends from the analyzing apparatus through an opening 44 in the rear (or bottom) wall of the container 10 to push against a stack positioning element 45. The stack positioning element 45, best seen in perspective in Fig. 3, may be regarded as a box with substantially open top and bottom. Two rails 46, 48 extend upwards from the top of the box to support the stack 40 of slides 38. End walls 58 and 60 are secured to side walls 59 and 61 of the stack-positioning element 45 only in their upper regions indicated by the reference numeral 63. Thus, the lower portions of the end walls 58 and 60 are able to flex inwardly of the stack-positioning element 45. Ratchet pawls 50 and 52 are provided on the outer faces of the lower ends of the end walls 58 and 60. The ratchet pawls 50 and 52 cooperate with respective sets of ratchet teeth 56 to inhibit movement of the slides 38 away from the dispensing station of container 10 should the container 10 be removed from the analyzer nest after some but not all of the slides 38 have been dispensed therefrom. Upon removal of the container 10, plunger 42 is withdrawn from opening 44 so that only cooperation of the ratchet pawls 50 and 52 and ratchet teeth 56 keep the slide stack 40 from becoming disoriented.

The end walls 58 and 60 of the stack-positioning element 45 are integral with the remainder of the stack-positioning element 45 and are flexible and resilient. The end walls 58 and 60 bias the ratchet pawls 50 and 52 into engagement with ratchet teeth 56 with sufficient force to maintain such engagement when subjected to a reasonably expected amount of jarring. The end walls 58 and 60 and ratchet pawls 50 and 52 form anti-backup means.

However, any lateral forces applied to the ratchet pawls 50 and 52 by end walls 58 and 60 must be overcome by plunger 42 to move the stack positioning element 45 forwardly in the container 10. This resistance can, of course, be offset by a similar increase in the force applied by the plunger, but that increase in force would increase the force to be overcome by an operator loading full containers into the analyzer apparatus. Perhaps the most serious effect of increasing the plunger force would be the increased resistance encountered by the push blade 36 when it is activated to push the forwardmost slide from the stack 40. Therefore, it is desirable to keep the spring force urging plunger 42 forwardly to a minimum. Accordingly, the present invention provides means for decreasing the lateral force applied to the ratchet pawls 50 and 52 when plunger 42 pushes against the stack positioning element 45, while permitting the maximum lateral force to be applied when the container 10 is not received in the nest 24 of the analyzing apparatus.

Referring to Fig. 5, a partial cross-sectional view of stack positioning element 45 and one of the container walls, which form the boundary of the chamber, shows the cooperation between ratchet pawl 52 and ratchet teeth 56 when the container 10 is removed from the analyzer apparatus. Ratchet pawl 52 is urged by flexible end wall 60 into the space between the ratchet teeth 56 to prevent downward movement of the stack positioning element 45. The lateral force of end wall 60 pushing ratchet pawl 52 into engagement with the ratchet teeth 56 is sufficient to prevent the ratchet pawl 52 from being jarred from the ratchet teeth 56 during handling.

A hollow cup-shaped member 62 (for storing desiccant) forms a part of stack positioning element 45 and is attached to flexible end walls 58 and 60 by a pair of webs 64 and 66 (See Fig. 3) extending from the top of the cup-shaped member 62 to the lower ends of end walls 58 and 60, respectively. When container 10 is inserted into a nest 24 so that the plunger 42 enters the container 10 through its bottom opening 44, the plunger 42 resiliently pushes against the bottom of cup-shaped member 62. Since rails 46 and 48 bear against the bottom of slide stack 40, the main body of the stack positioning element 45 cannot move upwardly in the container 10 until a slide 38 has been dispensed. However, cup-shaped member 62, which is attached to the main body of the stack positioning element 45 by end walls 58 and 60 and webs 64 and 66, may move towards the dispensing station 15 relative to the stack positioning element 45 through flexing of end walls 58 and 60. The cup-shaped member 62 and the webs 64 and 66 may be regarded as means for opposing the outwards bias on the end walls 58 and 60 and ratchet pawls 50, 52.

The result of this movement (somewhat exaggerated for clarity) is shown in Fig. 6. Note that plunger 42 has pushed cup-shaped member 62 upwardly relative to rail 46. End wall 60 has flexed and ratchet pawl 52 has moved somewhat out of the space between ratchet teeth 56. Now, as slides 38 are removed successively from the container 10, ratchet pawls 50 and 52 offer less resistance to upward movement of stack positioning element 45. Therefore, the spring pressure exerted by plunger 42 may be less than would be required if the lateral force on ratchet pawls 50 and 52 was not reduced.

When the container 10 is removed from the analyzing apparatus, cup-shaped member 62 once again returns to its Fig. 5 position relative to rails 46 and 48 so that ratchet pawls 50 and 52 are pressed into the recesses between the ratchet teeth 56 and the possibility of the ratchet pawls 50 and 52 being jarred from the ratchet teeth 56 is decreased. It should be noted it is not necessary for ratchet pawls 50 and 52 to move entirely out of the spaces between ratchet teeth 56 to reduce the resistance to upward movement of stack positioning element 45 when force is applied to the stack positioning element 45 to move it toward the dispensing station 15 of container 10.

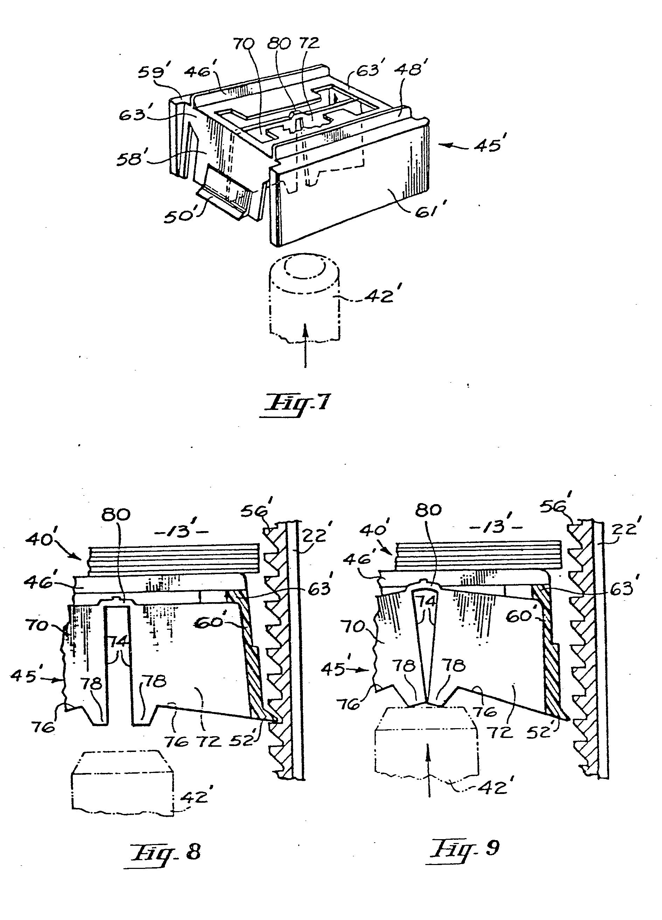

Portions of a second embodiment of the present invention are illustrated in Figs. 7 to 9. In this second embodiment parts and features which are structurally and/or functionally similar to parts and features in the first embodiment are given the same reference numerals but with a prime (') suffix. Those parts and features which are the same in the second embodiment as in the first embodiment will not be described again and for a full understanding of portions of the second embodiment not described, reference should be made to the description and illustrations of the first embodiment.

The stack positioning element 45' of the second embodiment is generally similar to that of the first embodiment but lacks the cup-shaped member 62 and the webs 64 and 66. In order to oppose the outward bias of, and to cause inward displacement of, the ratchet pawls 50', 52' on end walls 58', 60' upon the application of force by the plunger 42' to the element 45', each end wall 58' 60' has an integral, perpendicular flange 70, 72, respectively. The flanges 70, 72 constitute means for opposing the bias. The two flanges 70, 72 extend towards one another in the same plane. Their edges 74 remote from the end walls 58', 60' are spaced from one another. The inner upper corners of the flanges 70, 72 are resiliently connected by an integral bridge 80 which is of dished form, rather than rectilinear.

The lower edges 76 of the flanges 70, 72 are re-entrant so that the lower inner corners 78 of the flanges 70, 72 form projections which constitute bearing surfaces for engagement by the plunger 42'.

Figs. 7 and 8 represent the condition of the stack positioning element 45' when the plunger 42' is not engaging it. In this condition the ratchet pawls 50', 52' are biased outwards into spaces between ratchet teeth 56' and resist downwards (as seen in the Figures) movement of the stack positioning element 45' and slide stack 40' within the chamber 13'. Thus the slides are kept in close, stacked form and are prevented from assuming random orientation and, perhaps, overturning.

In Fig. 9 the plunger 42' is in forced engagement with the corners 78 of the flanges 70, 72 and has caused inwards flexing of the end walls 58', 60' so that ratchet pawls 50', 52' have moved out of the spaces between ratchet teeth 56'.

The relaxed condition of the element 45' is that illustrated in Figs. 7 and 8. In the Fig. 9 condition stresses are created at the regions 63' of connection of the end walls 58', 60' with the side walls 59', 61' which stresses tend to return the element to the Figs. 7 and 8 condition when the plunger 42' is disengaged from the flanges 70, 72.

As can be seen in Fig. 9, the ratchet pawls 50', 52' will not contact the ratchet teeth 56' when the element 45' moves forwardly (upwardly as seen in the Figs.), whereas in the first described embodiment there may be some chattering as the ratchet pawls move over the ratchet teeth. Thus the second embodiment has the benefit that the spring force urging the plunger may be yet further reduced.

In this second embodiment because the ratchet pawls 50', 52' are displaced inwards by such distances that they do not contact the ratchet teeth 56' upon forwards movement, it follows that the ratchet pawls might not engage the ratchet teeth upon rearwards (downwards as seen in the Figs.) movement of the stack positioning element 45' unless the following is observed. The ratchet pawls 50', 52' should be displaced to a position in which they always still extend into the sets of ratchet teeth by some at least minimal extent when relative movement of the plunger 42' out of the container has just commenced. This desideratum is achieved if the stack positioning element 45' is so constructed that the condition exists with a full slide stack 40' but in the absence of any reaction force by the end wall of the container on the forwardmost slide. Upon commencement of relative withdrawal of the plunger 42' the forwardmost slide will move out of contact with the end wall of the container. Hence the reaction force of the end wall on the forwardmost slide is lost. Therefore, the stress in the element is reduced and the end walls 58' 60' move out. Once the ratchet pawls 50', 52' have at least just caught on the ratchet teeth 56' rearwards motion of the stack 40' is prevented and the rocking motion of the flanges 70, 72 and end walls 58', 60' to their Fig. 8 position occurs upon a further very small withdrawal movement of the plunger 42'. Once the plunger 42' is out of contact with the corners 78 of the flanges 70, 72 the ratchet pawls 50', 52' are in their full outward position in which they create maximum resistance to rearwards displacement of the slide stack 40'.

The bridge 80 serves to ensure that the flanges 70 and 72 have substantially similar displacements, if any, at all times and that therefore they move in harmony.

## Claims

1. A container for articles including a chamber (13, 13′) in which a stack (40, 40′) of articles may be received and a dispensing station at one end of the chamber at which articles are removable in sequence from the forward end of the stack, characterized by a stack positioning element (45, 45′) in the chamber having an anti-backup means and being movable toward the dispensing station to move a received stack of articles towards the dispensing station and to move the temporarily forwardmost article into the dispensing station, the anti-backup means (58, 60, 50, 52; 58′ 60′, 50′, 52′) on the stack positioning element being engageable with the boundary (56; 56′) of the chamber for inhibiting movement of the stack positioning element away from the dispensing station, biasing means (58, 60; 63′) for biasing the anti-backup means towards engagement with the boundary of the chamber and means (62, 64, 66; 70, 72) for opposing said bias when a force is applied to the stack positioning element tending to move the stack towards the dispensing station.

2. A container according to claim 1, characterized in that the anti-backup means includes an end wall (58, 60; 58′, 60′) attached at one end to the remainder of the stack positioning element (45; 45′), and a pawl (50, 52; 50′, 52′) on said end wall and spaced from said end and for engagement with the boundary (56; 56′) of the chamber.

3. A container according to claim 2, characterized in that the boundary includes ratchet teeth (56; 56′) for engagement by the pawl (50, 52; 50′, 52′).

4. A container according to claim 2 or 3, characterized in that the means for opposing said bias includes a device (62, 64, 66; 70, 72) for receiving a force tending to move the stack towards the dispensing station, a portion of said device being movable in response to said force relative to the remainder of the stack positioning element (45, 45′) towards said dispensing station, said device being so formed as to cause movement of the pawl (50, 52; 50′, 52′) away from said boundary upon movement of said portion toward the dispensing station.

5. A container according to any one of claims 2 to 4, characterized in that said end wall (58, 60; 58′, 60′) is integral with the remainder of the stack positioning element (45, 45′) and has a natural position in which the pawl (50, 52; 50′, 52′) engages the boundary (56; 56′) of the chamber, movement of the pawl away from that natural position being opposed by the resilience of the material forming the end wall and its interconnection with the remainder of the stack positioning element.

6. A container according to claim 5 when appendant to claim 4, characterized in that the end wall is one of two similar end walls (58′, 60′) disposed at opposite sides of the stack positioning element, each end wall having a pawl (50′, 52′) and that said device includes two flanges (70, 72) integral one with each of the end walls, the flanges being coplanar and resiliently connected for movement in harmony.

## Revendications

1. Conteneur pour articles muni d'un compartiment (13, 13′) destiné à recevoir une pile (40, 40′) d'articles et d'un poste de distribution à une extrémité de ce compartiment d'où on peut extraire successivement les articles depuis l'extrémité antérieure de la pile, conteneur caractérisé en ce qu'il comprend un organe de positionnement de pile (45, 45′) placé dans le compartiment ayant un dispositif anti-retour et étant mobile en direction du poste de distribution de manière à pousser une pile d'articles qui y a été placée vers le poste de distribution et à disposer celui des articles qui se trouve momentanément à l'extrémité de la pile dans le poste de distribution, le dispositif anti-retour (58, 60, 50, 52, 58′, 60′, 504, 52′) sur l'organe de positionnement pouvant venir au contact de la périphérie (56, 56′) du compartiment pour interdire à l'organe de positionnement de s'éloigner du poste de distriction, des moyens de sollicitation élastiques (58, 60; 63′) pour appliquer le dispositif anti-retour contre la périphérie du compartiment et des moyens (62, 64, 66; 70, 72) s'opposant à cette sollicitation lorsque s'exerce sur l'organe de positionnement une force tendant à déplacer la pile vers le poste de distribution.

2. Conteneur conforme à la revendication 1, caractérisé en ce que le dispositif anti-retour comprend une paroi d'extrémité (58, 60, 58′, 60′) fixée à une extrémité du reste de l'organe de positionnement (45, 45′) et sur cette paroi d'extrémité un cliquet (50, 52; 50′, 52′) distant de cette extrémité et disposé pour venir au contact de la périphérie (56, 56′) du compartiment.

3. Conteneur conforme à la revendication 2, caractérisé en ce que la périphérie porte des dents de rochet (56, 56′) coopérant avec le cliquet (50, 52; 50′, 52′).

4. Conteneur conforme à la revendication 2 ou 3, caractérisé en ce que les moyens s'opposant à cette sollicitation comprennent un dispositif (62, 64, 66; 70, 72) pour recevoir une force tendant à déplacer la pile en direction du poste de distribution, une partie de ce dispositif étant susceptible de se déplacer sous l'action de cette force par rapport au reste de l'organe de positionnement (45, 45′) vers le poste de distribution, ce dispositif étant agencé pour éloigner le cliquet (50, 52; 50', 52') de la périphérie lorsque cette partie se meut vers le poste de distribution.

5. Conteneur conforme à l'une quelconque des revendications 2 à 4, caractérisé en ce que cette paroi d'extrémité (58, 60; 58', 60') est d'un seul tenant avec le reste de l'organe de positionnement (45, 45') et a une position naturelle dans laquelle le cliquet (50, 52; 50', 52') est au contact de la périphérie (56, 56') du compartiment, le déplacement du cliquet à l'écart de sa position naturelle se faisant à l'encontre de l'élasticité du matériau constituant la paroi d'extrémité et sa liaison avec le reste de l'organe de positionnement.

6. Conteneur conforme à la revendication 5, dans la mesure où elle dépend de la revendication 4, caractérisé en ce que la paroi d'extrémité est l'une des deux parois d'extrémité similaires (58', 60') disposées sur deux côtés opposés de l'organe de positionnement, chaque paroi d'extrémité portant un cliquet (50', 52') et en ce que ce dispositif comprend deux âmes (70, 72) faisant corps chacune avec l'une des parois d'extrémité, ces âmes étant coplanaires et reliées élastiquement pour se déplacer en harmonie.


**Patentansprüche**

1. Behälter für Gegenstände mit einer Kammer (13, 13') zur Aufnahme eines Stepels (40, 40') von Gegenständen, und mit einer an dem einen Ende der Kammer befindlichen Ausgabestation, aus der Gegenstände nacheinander vom vorderen Stapelende entnommen werden können, gekennzeichnet durch ein in der Kammer vorgesehns, ein Sperrmittel umfassendes und zur Ausgabestation hin bewegbares Stapelpositionierelement (45, 45'), das einen eingelegten Stapel von Gegenständen in Richtung zur Ausgabestation bewegt und den jeweils vordersten Gegenstand in die Ausgabestation bringt, wobei das an dem Stapelpositionierelement angeordnete Sperrmittel (58, 60, 50, 52; 58', 60', 50', 52') mit dem Rand (56, 56') der Kammer in Eingriff bringbar ist, um eine Wegbewegung des Stapelpositionierelements von der Ausgabestation zu verhindern, durch Vorspannmittel (58, 60; 63'), die das Sperrmittel zum Eingriff mit dem Rand der Kammer vorspannen, und durch Mittel (62, 64, 66; 70, 72), welche dieser Vorspannkraft entgegenwirken, wenn eine Kraft auf das Stapelpositionierelement ausgeübt wird, die den Stapel zur Ausgabestation hin zu bewegen versucht.

2. Behälter nach Anspruch 1, dadurch gekennzeichnet, daß das Spermittel eine Seitenwand (58, 60; 58', 60') besitzt, die an einen Ende des Stapelpositionierelements (45; 45') befestigt ist, sowie eine an der Seitenwand angebrachte Rastklinke (50, 52; 50', 52'), die von dieser Wand absteht und mit dem Rand (56; 56') der Kammer in Eingriff bringbar ist.

3. Behälter nach Anspruch 2, dadurch gekennzeichnet, daß der Rand Sperrzähne (56, 56') aufweist, in welche die Rastklinke (50, 52; 50', 52') eingreift.

4. Behälter nach Anspruch 2 oder 3, dadurch gekennzeichnet, daß die der Vorspannkraft entgegenwirkenden Mittel eine Vorrichtung (62, 64, 66; 70, 72) zur Aufnahme einer Kraft aufweisen, die den Stapel in Richtung auf die Ausgabestation zu bewegen versucht, wobei ein Teil dieser Vorrichtung unter Einwirkung dieser Kraft relativ zum Stapelpositionierelement (45, 45') in Richtung auf die Ausgabestation bewegbar ist, und daß die Vorrichtung so ausgebildet ist, daß bei Bewegung des Teils zur Ausgabestation hin die Rastklinke (50, 52; 50', 52') vom Rand wegbewegt wird.

5. Behälter nach einem der Ansprüche 2 bis 4, dadurch gekennzeichnet, daß die Seitenwand (58, 60; 58', 60') einstückig mit dem Stapelpositionierelement (45, 45') ausgebildet ist und daß in der Ausgangsstellung der Seitenwand die Rastklinke (50, 52; 50', 52') mit dem Rand (56; 56') der Kammer in Eingriff steht, wobei eine federnde Ausgestaltung des die Seitenwand und deren Verbindungsstück mit dem Stapelpositionierelement bildenden Materials einer Bewegung der Klinke aus der Ausgangsstellung entgegenwirkt.

6. Behälter nach Anspruch 5 in Verbindung mit Anspruch 4, dadurch gekennzeichnet, daß es sich bei der Seitenwand um eine von zwei gleichartigen Seitenwänden (58', 60') handelt, die auf gegenüberliegenden Seiten des Stapelpositionierelements angeordnet sind, wobei jede Seitenwand eine Rastklinke (50', 52') aufweist, und daß die Vorrichtung zwei Stege (70, 72) besitzt, die jeweils mit einer der Seitenwände einstückig ausgebildet, in einer Ebene angeordnet und so federnd miteinander verbunden sind, daß ihre Bewegungen gemeinsam erfolgen.

FIG. 1

FIG. 2

FIG. 3

FIG. 4

FIG. 5

FIG. 6

70 80 72

59' 46' 63' 48'

63'

58' 45'

50' 61'

42'

_Fig._7

80 56'
40' -13' 22'
46' 63'
70 60'
74
45' 78 78
76
76 72 52'
42'

_Fig._8

80 56'
40' -13' 22'
46' 63'
74
70 60'
45' 78 78
76 76
72 52'
42'

_Fig._9